(19)

Europäisches Patentamt
European Patent Office
Office européen des brevets

(11)  **EP 4 697 697 A1**

(12)  **EUROPEAN PATENT APPLICATION**

(43) Date of publication:
**18.02.2026 Bulletin 2026/08**

(21) Application number: **25183716.7**

(22) Date of filing: **18.06.2025**

(51) International Patent Classification (IPC):
**H04N 7/14** *(2006.01)*  **H04N 7/15** *(2006.01)*

(52) Cooperative Patent Classification (CPC):
**H04N 7/147; H04M 3/567; H04M 3/568; H04N 7/15;**
H04M 2201/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.08.2024  GB 202411925**

(71) Applicant: **Nokia Technologies Oy
02610 Espoo (FI)**

(72) Inventors:
- **VILERMO, Miikka Tapani
  Siuro (FI)**
- **PIHLAJAKUJA, Tapani
  Kellokoski (FI)**
- **LEHTINIEMI, Arto Juhani
  Lempäälä (FI)**

(74) Representative: **Nokia EPO representatives
Nokia Technologies Oy
Karakaari 7
02610 Espoo (FI)**

(54)  **SPATIAL AUDIO FOR VIDEO CALLS**

(57)  Examples of the disclosure relate to spatial audio for video calls where two or more participants use different devices to participate in the video call but are in the same acoustic location. An apparatus identifies two or more participant devices of a video call in an acoustic location where the participant devices provide images for a composite image for one or more recipients in the video call. At least one of the identified participant devices provides audio signals for the video call such that the audio signals correspond to the composite image. The apparatus also determines positions of images from the identified participant devices in the composite image and associates the audio signals from the two or more participant devices with images from the identified participant devices in the composite image. The apparatus also adjusts the directions of audio signals from the identified participant devices to increase the angle from centre to counteract audio leakage between the identified participant devices and renders audio from the identified participant devices to the adjusted direction.

```
┌─────────────────────────┐
│  Identify participant   │──── 500
│       devices           │
└─────────────────────────┘
             │
             ▼
┌─────────────────────────┐
│   Determine image       │──── 502
│      positions          │
└─────────────────────────┘
             │
             ▼
┌─────────────────────────┐
│  Associate audio signals│──── 504
│      with images        │
└─────────────────────────┘
             │
             ▼
┌─────────────────────────┐
│  Adjust directions of   │──── 506
│     audio signals       │
└─────────────────────────┘
             │
             ▼
┌─────────────────────────┐
│    Render audio to      │──── 508
│   adjusted direction    │
└─────────────────────────┘
```

**FIG. 5**

EP 4 697 697 A1

## Description

TECHNOLOGICAL FIELD

Examples of the disclosure relate to spatial audio for video calls. Some relate to spatial audio for video calls where two or more participants use different devices to participate in the video call but are in the same acoustic location.

BACKGROUND

Spatial audio can be used in video calls. The use of spatial audio can enable spatial properties of sending participants to be rendered so that a receiving participant can perceive different sending participants to be in different positions.

BRIEF SUMMARY

According to various, but not necessarily all, examples of the disclosure there may be provided an apparatus for enabling video calls comprising means for:

identifying two or more participant devices of a video call in an acoustic location where the participant devices provide images for a composite image for one or more recipients in the video call and at least one of the identified participant devices provides audio signals for the video call such that the audio signals correspond to the composite image;
determining positions of images from the identified participant devices in the composite image;
associating the audio signals from the two or more participant devices with images from the identified participant devices in the composite image;
adjusting the directions of audio signals from the identified participant devices to increase the angle from centre to counteract audio leakage between the identified participant devices; and
rendering audio from the identified participant devices to the adjusted direction.

At least one of the participant devices may be used by multiple users.
A magnitude of the adjustment of the directions of the audio signal may be dependent upon an amount of audio leakage.
The amount of audio leakage may be determined based on a correlation of audio signals from the identified participant devices.
Acoustic echo cancellation may be performed on the audio signals from the identified participant devices.
The means may be for:

identifying two or more participant devices of the video call in an acoustic location where the participant devices provide images for a composite image for one or more recipients in the video call;
selecting a participant device from the identified participant devices in the acoustic location to use as a primary participant device for the acoustic location;
separating an audio signal from the primary participant device into parts;
associating the separated parts of the audio signal with images from the identified participant devices;
determining positions of images from the identified participant devices in a composite image; and
rendering directions of the separated parts of the audio signal to the positions of the images from the identified participant devices in the composite image.

Audio signals from participant devices other than the primary participant device may be used to enhance spatial rendering of the audio signals from the primary participant device.
Audio signals from participant devices other than the primary participant device may be muted in one or more recipient participant devices.
Selecting a participant device from the identified participant devices may comprise selecting the participant device that provides audio signal with highest signal-to-noise ratio.
Different parts of the audio signals may comprise at least one of;

different objects,
different time frames, or
different time-frequency tiles.

Separating of the audio signal into parts may be performed using at least one of:

blind source separation; or
time-frequency transforms.

Associating the separated parts of the audio signal with images from the identified participant devices may comprise at least one of;

lip sync detection,
speaker recognition,
correlation of respective audio signals,
sound energy in a desired direction, or
classification of images.

A part of the audio signal from the primary participant device may be associated with each identified participant device in the acoustic location.
A part of the audio signal from the primary participant device may be associated with each identified participant device that provides video for the composition image.

Rendering of the directions may comprise at least one of:

> panning;
> binauralization; or
> Ambisoncs panning.

The apparatus may be provided within at least one of:

> a receiving participant device; or
> a server device.

According to various, but not necessarily all, examples of the disclosure there may be provided a method comprising:

> identifying two or more participant devices of a video call in an acoustic location where the participant devices provide images for a composite image for one or more recipients in the video call and at least one of the identified participant devices provides audio signals for the video call such that the audio signals correspond to the composite image;
> determining positions of images from the identified participant devices in the composite image;
> associating the audio signals from the two or more participant device with images from the identified participant devices in the composite image;
> adjusting the directions of audio signals from the identified participant devices to increase the angle from centre to counteract audio leakage between the identified participant devices; and
> rendering audio from the identified participant devices to the adjusted direction.

According to various, but not necessarily all, examples of the disclosure there may be provided a computer program comprising instructions which, when executed by an apparatus, cause the apparatus to perform:

> identifying two or more participant devices of a video call in an acoustic location where the participant devices provide images for a composite image for one or more recipients in the video call and at least one of the identified participant devices provides audio signals for the video call such that the audio signals correspond to the composite image;
> determining positions of images from the identified participant devices in the composite image;
> associating the audio signals from the two or more participant device with images from the identified participant devices in the composite image;
> adjusting the directions of audio signals from the identified participant devices to increase the angle from centre to counteract audio leakage between the identified participant devices; and

> rendering audio from the identified participant devices to the adjusted direction.

According to various but not necessarily all, examples of the disclosure there may be provided, an apparatus for enabling video calls, the apparatus comprising means for:

> identifying two or more participant devices of a video call in an acoustic location where the participant devices provide images for a composite image for one or more recipients in the video call;
> selecting a participant device from the identified participant devices in the acoustic location to use as a primary participant device for the acoustic location;
> separating an audio signal from the primary participant device into parts;
> associating the separated parts of the audio signal with images from the identified participant devices;
> determining positions of images from the identified participant devices in a composite image; and
> rendering directions of the separated parts of the audio signal to the positions of the images from the identified participant devices in the composite image.

According to various, but not necessarily all, embodiments there is provided an apparatus comprising

> at least one processor; and
> at least one memory including computer program code;
> the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

BRIEF DESCRIPTION

Some examples will now be described with reference to the accompanying drawings in which:

FIG. 1 shows an example system;
FIG. 2 shows another example system;
FIG. 3 shows an example method;
FIGS. 4A and 4B show an example use case scenario;
FIG. 5 shows an example method;
FIGS. 6A to 6E show an example use case scenario; and
FIG. 7 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

DETAILED DESCRIPTION

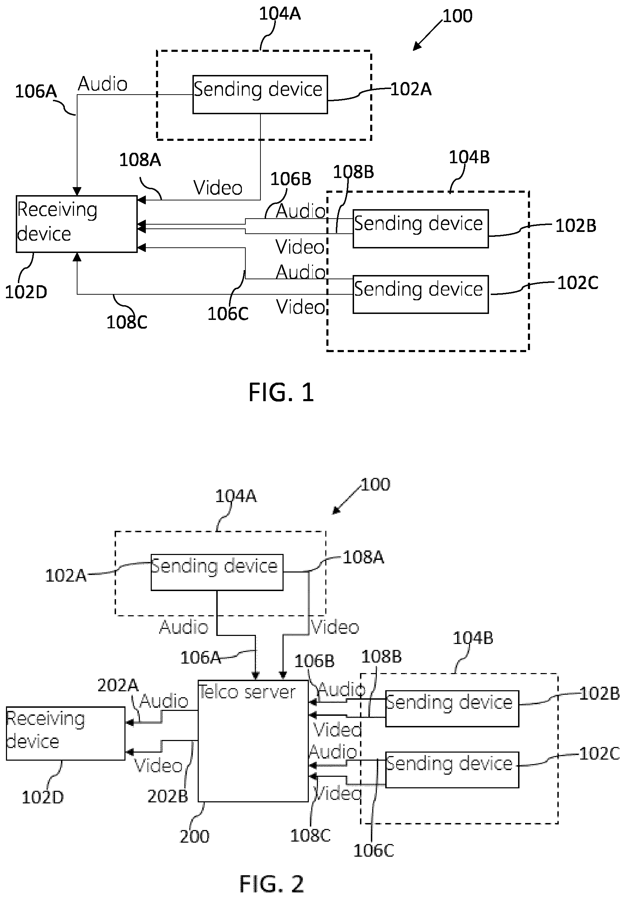

Fig. 1 shows an example system 100 that can be used in examples of the disclosure. The system 100 can be used for video calls in which both audio and video are transmitted between respective participant devices 102.

The system 100 comprises multiple participant devices 102. The participant devices 102 can comprise any devices that are configured to enable a user of the device to participate in a video call. The participant devices 102 can be a telephone, a tablet, a soundbar, a microphone array, a camera, a computing device, a teleconferencing device, a television, a Virtual Reality (VR) / Augmented Reality (AR) device or any other suitable type of device.

In Fig. 1 the participant devices 102 are shown as three sending participant devices 102A, 102B, 102C and one receiving participant device 102D. The system 100 is shown this way to indicate how multiple signals can arrive at a single participant device 102. In implementations of the disclosure the sending participant devices 102A, 102B, 102C can also receive signals from the other participant devices and the receiving participant device 102D can also send signals to other participant devices.

The sending participant devices 102A, 102B, 102C are configured to send audio signals 106A, 106B, 106C and video signals 108A, 108B, 108C to the receiving participant device 102D. The sending participant devices 102A, 102B, 102C can comprise any suitable means for capturing the audio signals 106A, 106B, 106C and video signals 108A, 108B, 108C such as microphones and cameras.

The receiving participant device 102D is configured to receive the audio signals 106A, 106B, 106C and video signals 108A, 108B, 108C from the sending participant devices 102A, 102B, 102C. The receiving participant device 102D is configured to process the received signals and render them for playback to a user of the participant device 102D. The rendered audio signals can be played back using loudspeakers, headphones or any other suitable means. The video signals can be played back using one or more displays.

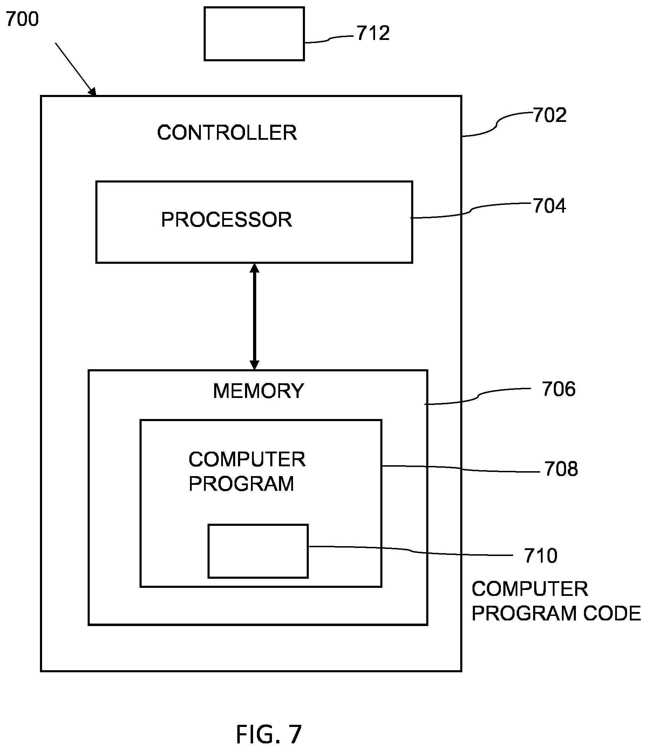

The teleconferencing system 100 can comprise apparatus for processing the respective signals. An example apparatus 700 is shown in Fig. 7. In the example of Fig. 1 the apparatus 700 can be provided within the receiving participant device 102D.

Fig. 2 shows another example system 100 which also comprises three sending participant devices 102A, 102B, 102C and one receiving participant device 102D. The system 100 shown in Fig. 2 differs from the system 100 in Fig. 1 in that it comprises a teleconferencing server 200. The teleconferencing server 200 is configured to receive the audio signals 106A, 106B, 106C and video signals 108A, 108B, 108C from the sending participant devices 102A, 102B, 102C. The teleconferencing server 200 is configured to process the received signals and send a processed audio signal 202A and a processed video signal 202B to the receiving participant device 102D. An apparatus 700 for processing the respective signals can be provided within the teleconferencing server 200.

The processing that is performed on the video signals 108 can comprise combining the respective video signals to generate a composite image. The composite image can be a larger image made of component images where the component images correspond to the video signals 108 from the respective sending participant devices 102A, 102B, 102C. This processing can be performed by the receiving participant device 102D in systems 100 as shown in Fig. 1 or in the teleconferencing server 200 in systems as shown in Fig. 2 or in any other suitable part of a system 100.

The processing that is performed on the audio signals 106 can comprise spatial audio rendering so that the audio associated with the respective sending participant devices 102A, 102B, 102C is rendered to a direction that corresponds to the position of the relevant image within the composite image. For example, if the image from the third participant device 102C is positioned on the right-hand side of a composite image, then the audio signal 106C from the third participant device 102C would be rendered so that it is perceived to come from the right hand side. This aligns the direction of the audio signal 106 with the position of the relevant image within the composite image. This processing can be performed by the receiving participant device 102D in systems 100 as shown in Fig. 1 or in the teleconferencing server 200 in systems as shown in Fig. 2 or in any other suitable part of a system 100.

In the systems 100 shown in Figs. 1 and 2 the first sending participant device 102A is in a first acoustic location 104A and the second participant device 102B and the third participant device 102C are in a second acoustic location 104B. The acoustic locations 104 comprises an area or environment around the participant device 102 from which acoustic signals can be detected by the participant device 102. The acoustic locations 104 can be rooms or other enclosed spaces or any other environments.

In Figs. 1 and 2 there are two participant devices 102B, 102C in the same second acoustic location 104B. This can lead to audio leakage where audio from the user of the second participant device 102B is captured by the third participant device 102C and/or audio from the user of the third participant device 102C is captured by the second participant device 102B.

The audio leakage can lead to errors in the spatial audio rendering so that the directions of the audio signals do not match the directions of the images in the composite image. For example, the positions of the images within the composite image are not necessarily the same as the relative positions within the acoustic location. The second participant device 102B could be positioned to the right-hand side of the third participant device 102C in the acoustic location 104 but the composite image can be arranged so that images from the second participant device 102B are positioned to the left of the images from the third participant device 102C. Any audio from the user of the second participant device 102B that is captured by the third participant device 102C would therefore be rendered to a direction that is not aligned with the images.

Examples of the disclosure provide methods and apparatus for rendering the audio signals to improve the alignment with the images in the composite image and reduce the effect of the audio leakage.

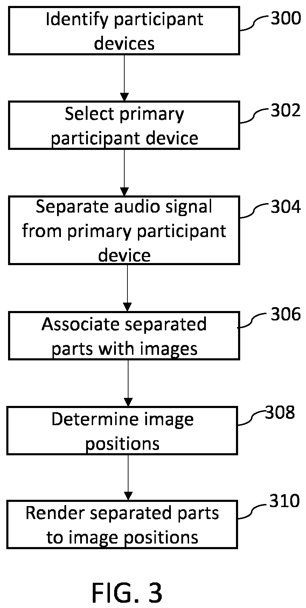

Fig. 3 shows an example method. The method could be implemented in a system 100 as shown in Figs.1 or 2 or in any other suitable system 100. The method could be implemented by an apparatus 700 or any other suitable means. The means for implementing the method could be provided within a receiving participant device 102, a server device such as a teleconferencing server 200, or any other suitable device or combination of devices.

At block 300 the method comprises identifying two or more participant devices 102 of a video call in an acoustic location 104. The video call can be a teleconference between multiple participants or any other suitable type of video call.

The acoustic location 104 is a real-world location where audio from a user of a first participant device 102 can leak into the audio signals from a second participant device 102. The acoustic location 104 could be a room or other enclosed space or any other environment where participant devices 102 might be close enough together to detect acoustic signals from other users.

Any suitable means can be used to identify two or more participant devices 102 within the same acoustic location 104. For example, a correlation between the audio signals from the participant devices 102 can be calculated. If the correlation is high or above a threshold then it can be assumed that the participant devices 102 are in the same acoustic location.

The participant devices 102 provide images for a composite image for one or more recipients in the video call. The composite image comprises images from multiple participant devices 102. The multiple participant devices 102 can include the participant devices 102 that are located in the same acoustic location 104 and also one or more other participant devices 102 that can be located in a different acoustic location. The images can be located at different positions within the composite image. For instance, an image from a first participant device 102 can be provided on a right-hand side of the composite image and an image from a second participant device 102 can be provided on a left-hand side of the composite image. The position of the images within the composite image does not need to correspond to or be determined by the relative positions of the participant devices 102 within the acoustic location 104.

At block 302 the method comprises selecting a participant device 102 from the identified participant devices102 in the acoustic location 104 to use as a primary participant device 102 for the acoustic location 104. The primary participant device 102 can be the participant device 102 that is used to provide the audio signals from the acoustic location 104 to the other participant devices 102 that are in the video call but that are not in the same acoustic location 104. The participant devices 102 that are identified as being in the same acoustic location 104 but that are not selected to be the primary participant device 102 can be muted in the video call.

Any suitable criteria can be used to select the primary participant device 102. In some examples the participant device 102 with the highest signal to noise ratio can be selected, or the participant device 102 that provides the loudest audio signals 106 or any other suitable criteria or combination of criteria can be used.

At block 304 the method comprises separating an audio signal from the primary participant device 102 into parts. The different parts of the audio signals can be based on different users or participants within the acoustic location 104. The different parts of the audio signals can comprise different objects, different time frames, or different time-frequency tiles or any other suitable different parts.

Any suitable means can be used to separate the audio signal from the primary participant device 102 into parts. In some examples separating of the audio signal into parts can be performed using blind source separation, time-frequency transforms or any other suitable process.

At block 306 the method comprises associating the separated parts of the audio signal with images from the identified participant devices 102. The association can determine which of the separated parts of the audio signal correspond to the respective users of the participant devices 102. For instance, it can determine which speech comes from the user of a first participant device 102 and which speech comes from a user of a second participant device 102.

Any suitable means can be used to associate the separated parts of the audio signal with images from the identified participant devices 102 such as lip sync detection, speaker recognition, correlation of respective audio signals, sound energy in a desired direction, or classification of images. The desired direction can be a frontal direction or any other suitable direction.

In some examples a part of the audio signal from the primary participant device 102 is associated with each identified participant device 102 in the acoustic location 104. In some examples a part of the audio signal from the primary participant device 102 is associated with each identified participant device 102 in the acoustic location 104 that provides video for the component image. This can enable some audio to be associated with each image in the component image.

At block 308 the method comprises determining positions of images from the identified participant devices in a composite image. For example, this can comprise determining if the image from a participant device 102 is located in the centre or towards the left-hand side or towards the right-hand side of the composite image. In some examples this can comprise determining the angular position of the respective images within the composite image.

At block 310 the method comprises rendering directions of the separated parts of the audio signal to the positions of the images from the identified participant devices in the composite image. The direction to which a separated part of the audio signal is rendered is determined by the position of the corresponding image in the composite image rather than the position of the participant device 102 in the acoustic location 104. This can result in the direction to which a separated part of the audio signal is rendered being different to the real-world direction. For example, a non-primary participant device 102 could be positioned to the right hand side of the primary participant device 102 in the acoustic location 104 but the composite image can be arranged so that images from the non-primary participant device 102 are positioned to the left of the images from the primary participant device 102. In examples of the disclosure the parts of the audio signals that are associated with the non-primary participant device 102 would be rendered to the left so that they are aligned with the relevant images rather than because of the real-world position.

The rendering of the directions can comprise panning, binauralization, Ambisoncs panning or any other suitable rendering.

In some examples the audio signals from participant devices 102 other than the primary participant device can be muted. The audio signals can be muted in the recipient participant devices. In some examples audio signals from participant devices 102 other than the primary participant device 102 can be used to enhance spatial rendering of the audio signals from the primary participant device.

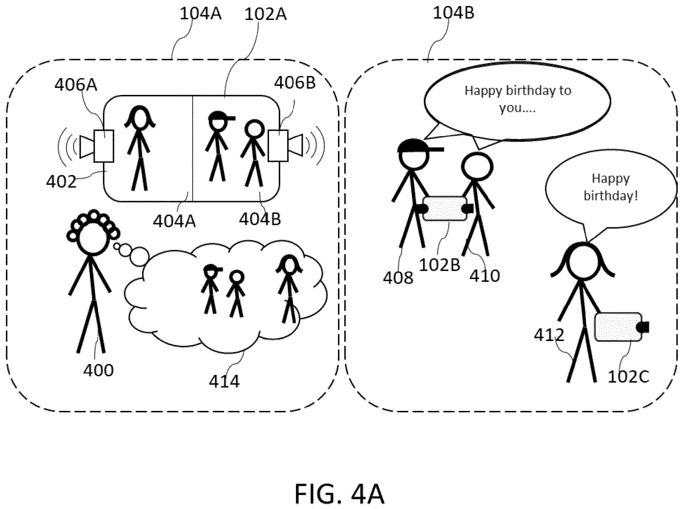

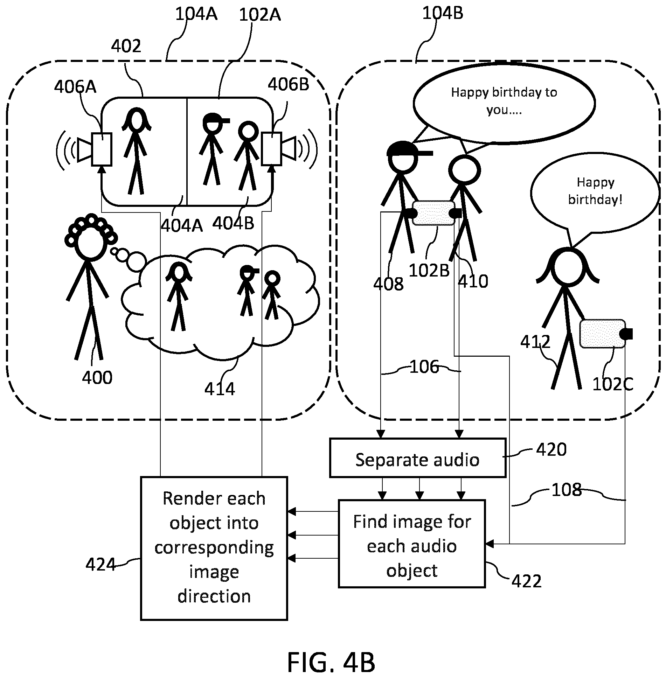

Figs. 4A and 4B show an example use case scenario. This can use the method shown in Fig. 3 and/or any suitable variations of this method.

In this scenario the video call is configured so that audio from multiple participant devices 102 in the same acoustic location 104 is not allowed. The reasons for preventing audio from multiple participant devices 102 in the same acoustic location 104 can be because acoustic echo cancellation is not used or is not effective or to limit the number or channels that are to be handled and processed by the system 100 or for any other reason. In this case a primary participant device 102 is selected and this primary participant device 102 is used to provide audio from all the participants in the same acoustic location.

Fig. 4A shows an example video call. In this case the video call is between multiple family members. Grandma 400 is located in a first acoustic location 104A. the first acoustic location could be a room within grandma's house or any other suitable location. Grandma 400 is using a participant device 102A to participate in the video call.

The other participants in the video call are a first child 408, a second child 410 and a mother 412. The two children 408, 410 are sharing a participant device 102B to participate in the video call. The mother 412 is using her own participant device 102C to participate in the video call. The children's participant device 102B and the mother's participant device 102C are separate and independent devices. There does not need to be any connection between the children's participant device 102B and the mother's participant device 102C other than that they are in the same video call and the same second acoustic location 104B.

The two children 408, 410 and the mother 412 are located in the same second acoustic location 104B. This could be the same room within their house or any other suitable location. In this example, in the real world, the mother 412 is located to the right-hand side of the children 408, 410 (from the perspective of a viewer looking at the second acoustic location 104B). The audio from the mother 412 that is captured by the children's participant device 102B will arrive at the children's participant device 102B from the right-hand side of the participant device 102B (from the perspective of a viewer looking at the acoustic location 104B).

The participant devices 102B, 102C of the children 408, 410 and the mother 412 capture video signals for use in the video call. In this example the participant devices 102B, 102C can be arranged to capture images of the users of the participant devices 102B, 102C so that the video signals from the children's participant device 102B comprise images of the children 408, 410 and the images from the mother's participant device 102C comprise images of the mother 412.

The video signals are processed to generate a composite image 402. The composite image 402 is for display on the receiving participant device 102A. In this example the composite image 402 is displayed on a display of grandma's participant device 102A.

The composite image 402 comprises multiple component images 404. The different component images 404 are based on video signals from respective sending participant devices 102B, 102C. In this use case scenario the composite image 402 comprises a first component image 404A and a second component image 404B. The first component image 404A comprises images from the mother's participant device 102C and the second component image 404B comprises images from the children's participant device 102B.

The respective component images 404A, 404B are displayed in different positions within the composite image. In the example of Fig. 4A first component image 404A is displayed on the left-hand side of the composite image 402 and the second component image 404B is displayed on the right-hand side of the composite image 402.

The participant devices 102B, 102C of the children 408, 410 and the mother 412 also capture audio signals. However, because the children 408, 410 and the mother 412 are in the same second acoustic location 104B, the children's participant device 102B is used to capture audio from the mother 412. The audio signals from the mother's participant device 102C can be muted or used to enhance the rendering of the audio from the children's participant device 102B.

The audio signals are processed and rendered for playback by grandma's participant device 102A. Grandma's participant device 102A comprises multiple speakers 406A, 406B that can be used to playback spatial audio.

Fig. 4A shows the spatial audio rendering 414. When the audio from the children's participant device 102B is spatially rendered the audio from the mother 412 appears to be to the right-hand side of the children 408, 410 because the mother 412 is to the right-hand side of the children 408, 410 in the real second acoustic location 104B. The spatial audio rendering 414 is therefore not aligned with the composite image 402 where the mother 412 is to the left of the children 408, 410.

Fig. 4B shows how the method of Fig. 3, or other similar methods, can be applied to address this problem. The process can be implemented by the receiving participant device 102A which would be grandma's participant device 102A in this case. In some examples the process could be implemented by a teleconferencing server 200 that could be provided between the sending participant devices 102B, 102C and the receiving participant device 102A. Any other suitable device or combination of device could be used in other examples.

In this case the participant devices 102B, 102C of the children 408, 410 and the mother 412 are determined to be in the same second acoustic location 104B. A correlation between the audio signals from the participant devices 102B, 102C of the children 408, 410 and the mother 412 can be used to determine that they are in same second acoustic location 104B and/or any other suitable process could be used.

The children's participant device 102B is selected as the primary participant device 102 for the second acoustic location 104B. The children's participant device 102B can be selected because it has the best signal to noise ratio, because it has the loudest audio signals or based on any other criteria or combination of criteria. The audio signals from the mother's participant device 102C can be muted or can be used to improve the spatial rendering of the audio signals from the children's participant device 102B.

At block 420 audio signals 106 from the children's participant device 102B are separated into parts. The respective parts can be audio objects. The audio objects can represent audio from the different users, for example a first audio object can correspond to audio from the children 408, 410 and a second audio object can correspond to audio from the mother 412. Other ways of separating the audio signals 106 into parts can be used in other examples.

At block 422 the video signals 108 from the children's participant device 102B and also the mother's participant device 102C are processed to find a corresponding image for each of the separate parts of the audio signals. In this case an image is found for each audio object.

For example, the video signal 108 from the children's participant device 102B can provide a first image and the video signal from the mother's participant device 102C can provide a second image. At block 422 the audio object that corresponds to the respective images is identified. In some examples the images that correspond to an audio object could be determined using lip sync detection. In such cases the image can be analyzed to determine if the children's lips are moving or if the mother's lips and moving and the audio can be matched to movements of the lips. In some examples the images that correspond to an audio object could be determined based on speaker recognition. For example, the voices in the audio objects could be matched to the children 408, 410 or to the mother 412. Other processes could be used in other examples such as correlation of respective audio signals, the amount of sound energy in the respective directions, classification of the images or any other suitable means. The classification of the images could comprise recognizing objects in the image such as the people or animals within an image and matching them with an associated sound.

Any suitable means can be used to find an image for each audio object. In some examples a machine learning model can be trained and used to find the images for the audio objects.

At block 424 the separated audio objects are rendered into a direction corresponding to the image in the composite image. In this case the second component image 404B from the children's participant device 102B is positioned on the right-hand side of the composite image 402. The audio object that is found to correspond to the second component image 404B from the children's participant device 102B is therefore also rendered to the right-hand side. The first component image 404A from the mother's participant device 102C is positioned on the left-hand side of the composite image 402. The audio object that is found to correspond to the first component image 404A from the mother's participant device 102C is therefore also rendered to the left-hand side. The spatial audio rendering 414 is therefore adjusted to account for the audio leakage so that the perceived directions of the audio corresponds to the positions of the corresponding images in the composite image.

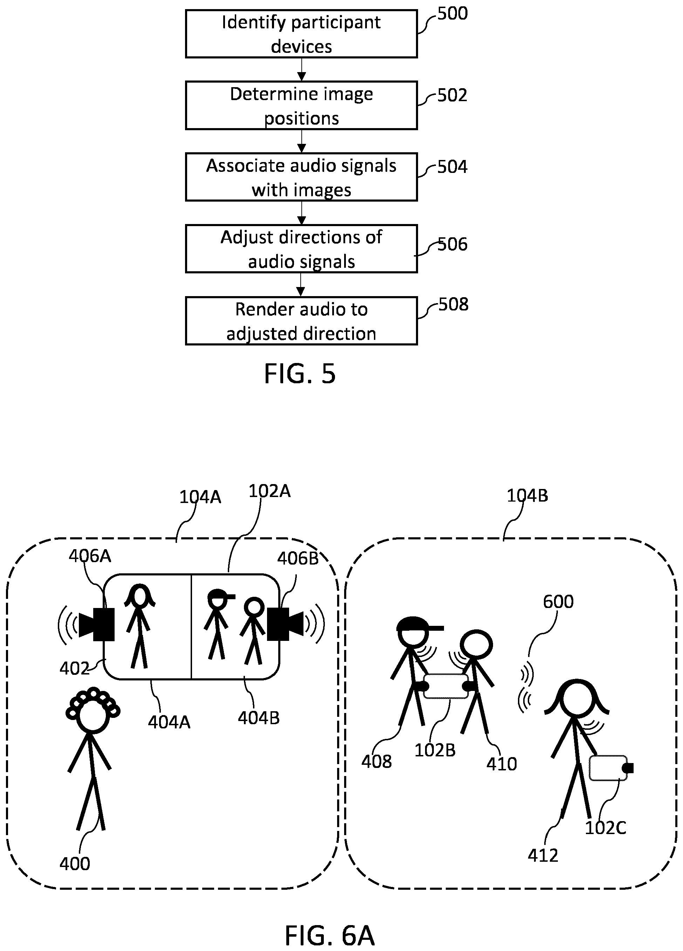

Fig. 5 shows an example method the method could be implemented in a system 100 as shown in Figs.1 or 2 or in any other suitable system 100. The method could be implemented by an apparatus 700 or any other suitable means. The means for implementing the method could be provided within a receiving participant device 102, a server device such as a teleconferencing server 200, or any other suitable device or combination of devices.

At block 500 the method the method comprises identifying two or more participant devices 102 of a video call in an acoustic location 104. The video call can be a teleconference between multiple participants or any other suitable type of video call. The two or more participant devices 102 that are in the same location can be identified using any suitable means such correlation between the audio signals from the respective participant devices 102. If the correlation is high or above a threshold then it can be assumed that the participant devices 102 are in the same acoustic location.

The participant devices 102 provide audio signals for the video call and also images for a composite image for one or more recipients in the video call. In this example the audio signals from two or more of the participant devices 102 in an acoustic location 104 can be used for the audio for the recipients. The participant devices 102 within the acoustic location 104 do not need to be muted.

The composite image comprises images from multiple participant devices 102. The multiple participant devices 102 can include the participant devices 102 that are located in the same acoustic location 104 and also one or more other participant devices 102 that can be located in a different acoustic location. The images can be located at different positions within the composite image. For instance, an image from a first participant device 102 can be provided on a right-hand side of the composite image and an image from a second participant device 102 can be provided on a left-hand side of the composite image. The position of the images within the composite image does not need to correspond to or be determined by the relative positions of the participant devices 102 within the acoustic location 104.

The audio signals that are provided by the one or more participant devices 102 correspond to the composite images. The audio signals and images can be provided together in a combined signal. The images can comprise images of the acoustic location.

At block 502 the method comprises determining positions of images from the identified participant devices 102 in the composite image. This can comprise determining if the image from a participant device 102 is located in the centre or towards the left-hand side or towards the right-hand side of the composite image. In some examples this can comprise determining the angular position of the respective images within the composite image.

At block 504 the method comprises associating audio signals from the participant devices with image from the participant devices in the composite image. The, the images can be associated with their corresponding audio signals so that an audio signal that originates from a first participant device is associated with the direction of the corresponding image in the composite image.

At block 506 the method comprises adjusting the directions of audio signals from the identified participant devices 102 to increase the angle from centre to counteract audio leakage between the identified participant devices 102. For example, if the audio signals from a first participant device 102 are rendered to be aligned with the positions of the images from the first participant device 102 within the composite image the effects of audio leakage can cause the perceived sound to not be correctly aligned with the images. Increasing the angle from centre can move the direction of the audio signals away from a central or frontal direction.

At block 508 the method comprises rendering audio from the identified participant devices to the adjusted direction.

Figs. 6A to 6E show another example use case scenario. This can use the method shown in Fig. 5 and/or any suitable variations of this method.

In this scenario the video call is configured so that audio from multiple participant devices 102 in the same acoustic location 104 can be allowed. In this case acoustic echo cancellation or other noise reduction techniques can be employed and can be effective.

Fig. 6A shows an example video call. In this case the video call is between multiple family members.

Grandma 400 is located in a first acoustic location 104A. the first acoustic location could be a room within grandma's house or any other suitable location. Grandma 400 is using a participant deice 102A to participate in the video call.

The other participants in the video are call are a first child 408, a second child 410 and a mother 412. The two children 408, 410 are sharing a participant device 102B to participate in the video call. The mother 412 is using her own participant device 102C to participate in the video call. The children's participant device 102B and the mother's participant device 102C are separate and independent devices. There does not need to be any connection between the children's participant device 102B and the mother's participant device 102C other than that they are in the same video call and the same second acoustic location 104B.

The two children 408, 410 and the mother 412 are located in the same second acoustic location 104B. This could be the same room within their house or any other suitable location. There can be acoustic leakage 600 between the children's participant device 102B and the mother's participant device 102C. That is audio from the children 408, 410 can be detected by the mother's participant device 102C and/or audio from the mother 412 can be detected by the children's participant device 102B.

In this example, in the real world, the mother 412 is located to the right-hand side of the children 408, 410 (from the perspective of a viewer looking at the second acoustic location 104B). The audio from the mother 412 that is captured by the children's participant device 102B will arrive at the children's participant device 102B from the right-hand side of the participant device 102B (from the perspective of a viewer looking at the second acoustic location 104B). Similarly, the audio from the children 408, 410 that is captured by the mother's participant device 102C arrives at the mother's participant device 102C from the left-hand side (from the perspective of a viewer looking at the second acoustic location 104B).

The participant devices 102B, 102C of the children 408, 410 and the mother 412 also capture video signals for use in the video call. In this example the participant devices 102B, 102C can be arranged to capture images of the users of the participant devices 102B, 102C so that the video signals from the children's participant device 102B comprise images of the children 408, 410 and the images from the mother's participant device 102C comprise images of the mother 412.

The video signals are processed to generate a composite image 402. The composite image 402 is for display on the receiving participant device 102A. In this example the composite image 402 is displayed on a display of grandma's participant device 102A.

The composite image 402 comprises multiple component images 404. The different component images 404 are based on video signals from respective sending participant devices 102B, 102C. In this use case scenario the composite image 402 comprises a first component image 404A and a second component image 404B. The first component image 404A comprises images from the mother's participant device 102C and the second component image 404B comprises images from the children's participant device 102B.

The respective component images 404A, 404B are displayed in different positions within the composite image. In the example of Fig. 6A first component image 404A is displayed on the left-hand side of the composite image 402 and the second component image 404B is displayed on the right-hand side of the composite image 402.

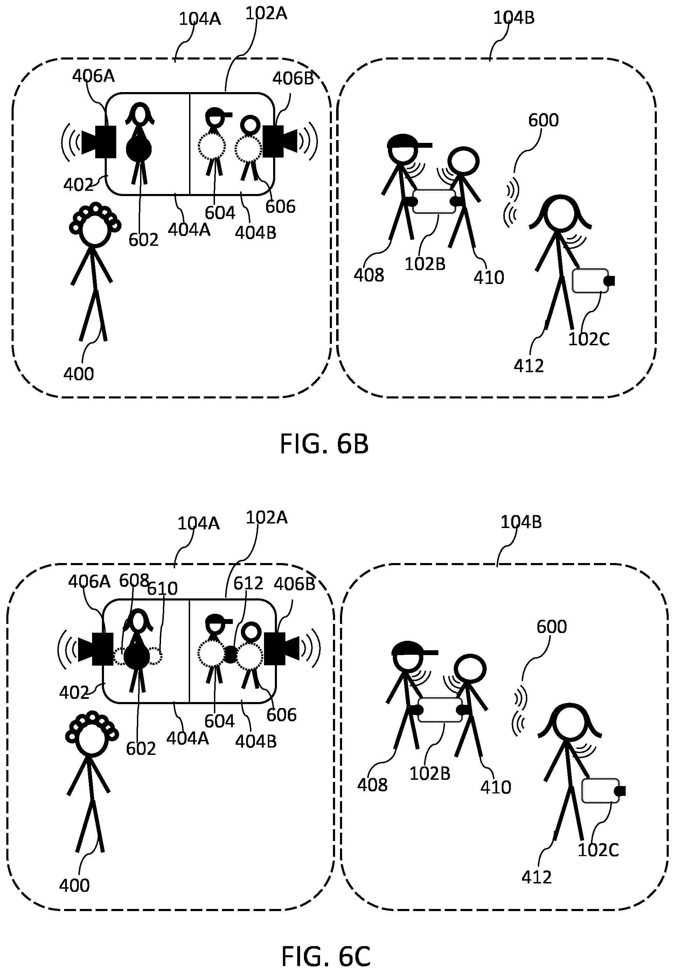

Fig. 6B shows how the audio from the sending participant devices 102B, 102C should be rendered for grandma's participant device 102A. The scenario shown in Fig. 6B shows how the audio would be rendered with no audio leakage. The audio from the mother's participant device 102C can be mono audio and should be rendered to the sector that is aligned with the images from the mother's participant device 102C. This is indicated by the dot 602 in Fig. 6B.

The audio from the children's participant device 102B can be spatial audio and should be rendered to the sector that is aligned with the images from the children's participant device 102B. This is indicated by the dots 604 and 606 in Fig. 6B.

Fig. 6C shows the audio leakage. The dots 608 and 610 show the audio from the children 408, 410 that leaks into the audio captured by the mother's participant device 102C. These dots 608 and 610 are smaller than the dot 602 representing the audio from the mother 412 because the children 408, 410 would be quieter for the mother's participant device 102C (because they are further away).

The dot 612 show the audio from the mother 412 that leaks into the audio captured by the children's participant device 102B. Again, this dot 612 is smaller than the dots 604, 606 representing the audio from the children 408, 410 because the mother 412 would be quieter for the children's participant device 102B (because she is further away).

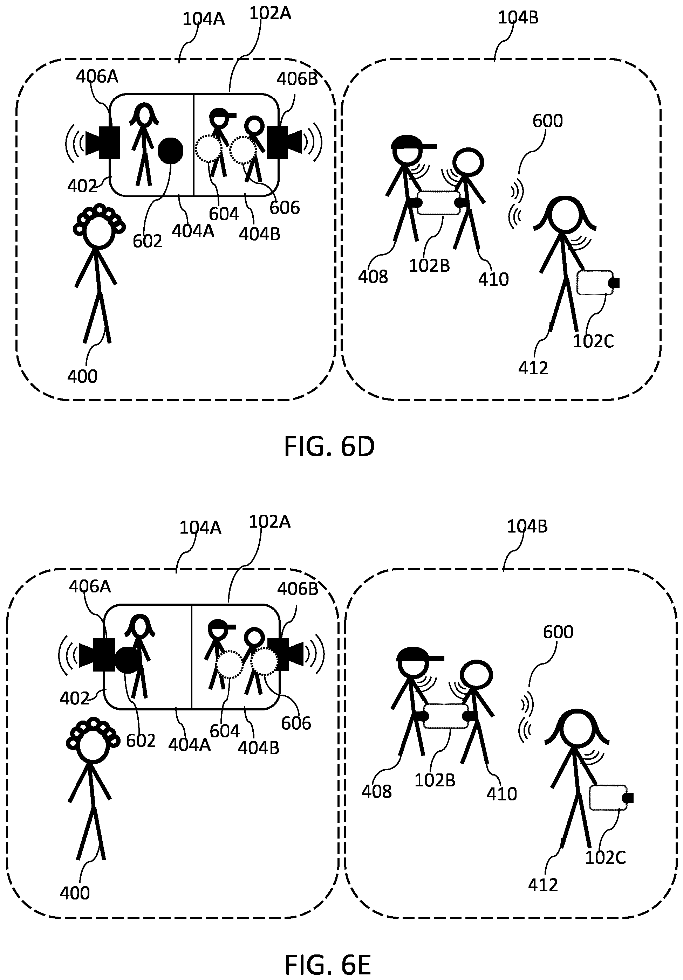

Fig. 6D shows the effect of audio leakage on the directions to which the audio is actually rendered. The audio leakage shifts the angles to which the audio is rendered towards the center. This leads to the perceived sound image being narrower than it should be and the directions of the audio not being correctly aligned with the directions of the corresponding objects in the images.

To address this the method of Fig. 5, or any other suitable method, can be implemented. The locations of the images from the respective sending participant devices 102B, 102C in the composite image 402 are determined. The directions of the audio signals from the sending participant devices 102C is then adjusted to counteract the audio leakage.

In some examples the adjusting of the direction of the audio signal can comprise determining a horizontal average for the directions of the audio signals from the sending participant devices 102C. Audio signals that are determined to be to the right of average have their direction adjusted so that they are even further to the right. Similarly audio signals that are determined to be to the left of average have their direction adjusted so that they are even further to the left. The average position can be the central position or could be any other suitable angle.

As an example, if the video call comprised three sending participant devices 102 in the same acoustic location 104 the directions of their respective images in a composite image 402 can be denoted $\alpha_i$ i=1,...,N. The adjusted directions for the audio signals would be:

$$\hat{\alpha}_i = \alpha_i + G\left(\alpha_i - \frac{\sum_1^N \alpha_i}{N}\right)$$

The factor G is an adjustment factor. G can be fixed and could be within a defined range such as 0.1...0.5. In some examples the adjustment factor G could be variable and could depend upon the amount of audio leakage. The adjustment factor G could be larger if there is more audio leakage and smaller if there is less audio leakage. The amount of audio leakage can be estimated from a correlation between the audio signals from the participant devices 102 in the same acoustic location 104.

Fig. 6E shows the effects of the adjustment of the direction of the audio signals. This shows that the audio from the mother's participant device 102C (as represented by the dot 602) is shifted towards the left-hand side of the composite image 402 and the audio from the children's participant device 102B (as represented by dots 604 and 606) is shifted towards the right-hand side of the composite image 402. This widens the perceived sound image and counteracts the effects of the audio leakage. This results in improved perceived audio for grandma 402 because the audio is better aligned with the component images 404A, 404B.

The methods shown in Figs. 5 and 6A to 6E can be used in cases where there is no feedback between the participant devices 102 that are in the same acoustic location 104. This could be the case if acoustic echo cancellation is used and is effective. In some cases presence of feedback can be detected. If feedback is detected then instead of using the methods of Figs 5 and 6A to 6E, the methods of Figs. 3 and 4A to 4B could be used.

Fig. 7 schematically illustrates an apparatus 700 that can be used to implement examples of the disclosure. In this example the apparatus 700 comprises a controller 702. The controller 702 can be a chip or a chipset. In some examples the controller 702 can be provided within a participant device 102 or a teleconferencing server 200 or any other suitable type of device.

In the example of Fig. 7 the implementation of the controller 702 can be as controller circuitry. In some examples the controller 702 can be implemented in hardware alone, have certain aspects in software including firmware alone or can be a combination of hardware and software (including firmware).

As illustrated in Fig. 7 the controller 702 can be implemented using instructions that enable hardware functionality, for example, by using executable instructions of a computer program 708 in a general-purpose or special-purpose processor 704 that can be stored on a computer readable storage medium (disk, memory etc.) to be executed by such a processor 704.

The processor 704 is configured to read from and write to the memory 706. The processor 704 can also comprise an output interface via which data and/or commands are output by the processor 704 and an input interface via which data and/or commands are input to the processor 704.

The memory 706 is configured to store a computer program 708 comprising computer program instructions (computer program code 710) that controls the operation of the controller 702 when loaded into the processor 704. The computer program instructions, of the computer program 708, provide the logic and routines that enables the controller 702 to perform the methods illustrated in the Figs. The processor 704 by reading the memory 706 is able to load and execute the computer program 708.

The apparatus 700 therefore comprises: at least one processor 704; and at least one memory 706 including computer program code 710, the at least one memory 706 and the computer program code 710 configured to, with the at least one processor 704, cause the apparatus 700 at least to perform:

identifying 500 two or more participant devices 102 of a video call in an acoustic location 104 where the participant devices 102 provide images for a composite image for one or more recipients in the video call and at least one of the identified participant devices 102 provides audio signals for the video call such that the audio signals correspond to the composite image;
determining 502 positions of images from the identified participant devices 102 in the composite image;
associating 504 the audio signals from the two or more participant devices 102 with images from the identified participant devices 102 in the composite image;
adjusting 506 the directions of audio signals from the identified participant devices 102 to increase the angle from centre to counteract audio leakage between the identified participant devices 102; and
rendering 508 audio from the identified participant devices 102 to the adjusted direction.

As illustrated in Fig. 7 the computer program 708 can arrive at the controller 702 via any suitable delivery mechanism 712. The delivery mechanism 712 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 708. The delivery mechanism 712 can be a signal configured to reliably transfer the computer program 708. The controller 702 can propagate or transmit the computer program 708 as a computer data signal. In some examples the computer program 708 can be transmitted to the controller 702 using a wireless protocol such as Bluetooth, Bluetooth Low Energy, Bluetooth Smart, 6LoWPan (IP$_v$6 over low power personal area networks) ZigBee, ANT+, near field communication (NFC), Radio frequency identification, wireless local area network (wireless LAN) or any other suitable protocol.

The computer program 708 comprises computer program instructions that when executed by an apparatus 700 cause the apparatus 700 to perform at least the following:

identifying 500 two or more participant devices 102 of a video call in an acoustic location 104 where the participant devices 102 provide images for a composite image for one or more recipients in the video call and at least one of the identified participant devices 102 provides audio signals for the video call such that the audio signals correspond to the composite image;
determining 502 positions of images from the identified participant devices 102 in the composite image;
associating 504 the audio signals from the two or more participant devices 102 with images from the identified participant devices 102 in the composite image;
adjusting 506 the directions of audio signals from the identified participant devices 102 to increase the angle from centre to counteract audio leakage between the identified participant devices 102; and
rendering 508 audio from the identified participant devices 102 to the adjusted direction.

The computer program instructions can be comprised in a computer program 708, a non-transitory computer readable medium, a computer program product, a machine readable medium. In some but not necessarily all examples, the computer program instructions can be distributed over more than one computer program 708.

Although the memory 706 is illustrated as a single component/circuitry it can be implemented as one or more separate components/circuitry some or all of which can be integrated/removable and/or can provide permanent/semi-permanent/ dynamic/cached storage.

Although the processor 704 is illustrated as a single component/circuitry it can be implemented as one or more separate components/circuitry some or all of which can be integrated/removable. The processor 704 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software can not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The apparatus 700 as shown in Fig. 7 can be provided within any suitable device. In some examples the apparatus 700 can be provided within an electronic device such as a mobile telephone, a teleconferencing device, a camera, a computing device, a server or any other suitable device.

The blocks illustrated in the Figs. can represent steps in a method and/or sections of code in the computer program 708. The illustration of a particular order to the blocks does not necessarily imply that there is a required or preferred order for the blocks and the order and arrangement of the blocks can be varied. Furthermore, it can be possible for some blocks to be omitted.

The above-described examples find application as enabling components of:

automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

**Claims**

1. An apparatus for enabling video calls comprising means for:

    identifying two or more participant devices of a video call in an acoustic location where the participant devices provide images for a composite image for one or more recipients in the video call and at least one of the identified participant devices provides audio signals for the video call such that the audio signals correspond to the composite image;
    determining positions of images from the identified participant devices in the composite image;
    associating the audio signals from the two or more participant devices with images from the identified participant devices in the composite image;
    adjusting the directions of audio signals from the identified participant devices to increase the angle from centre to counteract audio leakage between the identified participant devices; and
    rendering audio from the identified participant devices to the adjusted direction.

2. An apparatus as claimed in claim 1 wherein at least one of the participant devices is used by multiple users.

3. An apparatus as claimed in any preceding claim wherein a magnitude of the adjustment of the directions of the audio signal is dependent upon an amount of audio leakage.

4. An apparatus as claimed claim 3 wherein the amount of audio leakage is determined based on a correlation of audio signals from the identified participant devices.

5. An apparatus as claimed in any preceding claim wherein acoustic echo cancellation is performed on the audio signals from the identified participant devices.

6. An apparatus as claimed in any of claims 1 to 2 wherein the means are for:

    identifying two or more participant devices of the video call in an acoustic location where the participant devices provide images for a composite image for one or more recipients in the video call;
    selecting a participant device from the identified participant devices in the acoustic location to use as a primary participant device for the acoustic location;
    separating an audio signal from the primary participant device into parts;
    associating the separated parts of the audio signal with images from the identified participant devices;
    determining positions of images from the identified participant devices in a composite image; and

rendering directions of the separated parts of the audio signal to the positions of the images from the identified participant devices in the composite image.

7. An apparatus as claimed in claim 6 wherein audio signals from participant devices other than the primary participant device are used to enhance spatial rendering of the audio signals from the primary participant device.

8. An apparatus as claimed in any of claims 6 to 7 wherein audio signals from participant devices other than the primary participant device are muted in one or more recipient participant devices.

9. An apparatus as claimed in any of claims 6 to 8 wherein selecting a participant device from the identified participant devices comprises selecting the participant device that provides audio signal with highest signal-to-noise ratio.

10. An apparatus as claimed in any of claims 6 to 9 wherein different parts of the audio signals comprise at least one of;

different objects,
different time frames, or
different time-frequency tiles.

11. An apparatus as claimed in any of claims 6 to 10 wherein separating of the audio signal into parts is performed using at least one of:

blind source separation; or
time-frequency transforms.

12. An apparatus as claimed in any of claims 6 to 11 wherein associating the separated parts of the audio signal with images from the identified participant devices comprises at least one of;

lip sync detection,
speaker recognition,
correlation of respective audio signals,
sound energy in a desired direction, or
classification of images.

13. An apparatus as claimed in any of claims 6 to 12 wherein a part of the audio signal from the primary participant device is associated with each identified participant device in the acoustic location.

14. A method comprising:

identifying two or more participant devices of a video call in an acoustic location where the participant devices provide images for a composite image for one or more recipients in the video call and at least one of the identified participant devices provides audio signals for the video call such that the audio signals correspond to the composite image;
determining positions of images from the identified participant devices in the composite image;
associating the audio signals from the two or more participant device with images from the identified participant devices in the composite image;
adjusting the directions of audio signals from the identified participant devices to increase the angle from centre to counteract audio leakage between the identified participant devices; and
rendering audio from the identified participant devices to the adjusted direction.

15. A computer program comprising instructions which, when executed by an apparatus, cause the apparatus to perform:

identifying two or more participant devices of a video call in an acoustic location where the participant devices provide images for a composite image for one or more recipients in the video call and at least one of the identified participant devices provides audio signals for the video call such that the audio signals correspond to the composite image;
determining positions of images from the identified participant devices in the composite image;
associating the audio signals from the two or more participant device with images from the identified participant devices in the composite image;
adjusting the directions of audio signals from the identified participant devices to increase the angle from centre to counteract audio leakage between the identified participant devices; and
rendering audio from the identified participant devices to the adjusted direction.

FIG. 1

FIG. 2

Identify participant
devices ⌐300

Select primary
participant device ⌐302

Separate audio signal
from primary participant
device ⌐304

Associate separated
parts with images ⌐306

Determine image
positions ⌐308

Render separated parts
to image positions ⌐310

# FIG. 3

FIG. 4A

FIG. 4B

Identify participant
devices ⌐500

↓

Determine image
positions ⌐502

↓

Associate audio signals
with images ⌐504

↓

Adjust directions of
audio signals ⌐506

↓

Render audio to
adjusted direction ⌐508

## FIG. 5

104A  102A  104B

406A  406B

402  404A  404B  408  102B  410  600  102C  412

400

## FIG. 6A

FIG. 6B

FIG. 6C

FIG. 6D

FIG. 6E

700

712

CONTROLLER
702

PROCESSOR
704

MEMORY
706

COMPUTER
PROGRAM
708

710

COMPUTER
PROGRAM CODE

FIG. 7

Europäisches
Patentamt

European
Patent Office

Office européen
des brevets

## EUROPEAN SEARCH REPORT

**Application Number**

EP 25 18 3716

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/045569 A1 (KEREN AVRAHAM [IL]) 9 February 2023 (2023-02-09) * the whole document * ----- | 1-15 | INV. H04N7/14 H04N7/15 |
| A | US 2023/421702 A1 (CUTLER ROSS [US]) 28 December 2023 (2023-12-28) * the whole document * * paragraphs [0001], [0004], [0021], [0023], [0024], [0025], [0047] * ----- | 1-15 | |
| A | EP 2 618 564 A1 (HARMAN BECKER AUTOMOTIVE SYS [DE]) 24 July 2013 (2013-07-24) * the whole document * ----- | 1-15 | |
| A | EP 3 070 876 A1 (TELEFONICA DIGITAL ESPANA SLU [ES]) 21 September 2016 (2016-09-21) * the whole document * ----- | 1-15 | |

**TECHNICAL FIELDS SEARCHED (IPC)**

H04N
H04M

The present search report has been drawn up for all claims

| Place of search | Date of completion of the search | Examiner |
|---|---|---|
| Berlin | 7 November 2025 | Roche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 3716

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | | Publication date |
|---|---|---|---|---|---|
| US 2023045569 | A1 | 09-02-2023 | CN | 115706775 A | 17-02-2023 |
| | | | US | 2023045569 A1 | 09-02-2023 |
| US 2023421702 | A1 | 28-12-2023 | US | 2023421702 A1 | 28-12-2023 |
| | | | WO | 2023249786 A1 | 28-12-2023 |
| EP 2618564 | A1 | 24-07-2013 | CN | 103220491 A | 24-07-2013 |
| | | | EP | 2618564 A1 | 24-07-2013 |
| | | | US | 2013182064 A1 | 18-07-2013 |
| EP 3070876 | A1 | 21-09-2016 | NONE | | |

EPO FORM P0459

For more details about this annex : see Official Journal of the European Patent Office, No. 12/82